# FASCICULE DE BREVET EUROPEEN

(11) **EP 2 741 298 B1**
(45) Date de publication et mention de la délivrance du brevet: **06.07.2016**
(21) Numéro de dépôt: 13195416.6
(22) Date de dépôt: 03.12.2013
(51) Int. Cl.: G21F 5/015, G21F 5/14

(54) **Système de préhension et de verrouillage/déverrouillage**
System zum Greifen und Verriegeln / Entriegeln
System for gripping and for locking/unlocking

(30) Priorité: 04.12.2012 FR 1261578
(43) Date de publication de la demande: 11.06.2014
(73) Titulaire: COMMISSARIAT A L'ENERGIE ATOMIQUE ET AUX ENERGIES ALTERNATIVES, 75015 Paris (FR)
(72) Inventeur: Gay, Sébastien, 05700 Serres (FR); Peyre, Niels, 84000 Avignon (FR)
(74) Mandataire: Nony

(56) Documents cités:
- WO-A1-94/23236
- DE-A1- 3 636 016
- FR-A1- 2 906 638
- US-A- 4 716 946
- US-A1- 2008 265 183

## Description

### Domaine de l'invention

La présente invention concerne un nouveau système de préhension et de verrouillage/déverrouillage.

L'application principale visée par l'invention est la manutention de porte-échantillons de matériaux nucléaire dans un réacteur nucléaire de recherche, permettant l'introduction et l'extraction des porte-échantillons sans rupture du confinement vis-à-vis de l'atmosphère extérieure.

Bien que décrite ci-après en référence à l'application principale, l'invention s'applique également à toute application dans laquelle il est nécessaire d'introduire un tube intérieur dans un tube extérieur et d'assurer un verrouillage entre eux une fois l'introduction réalisée et, réciproquement d'assurer un déverrouillage entre les tubes avant l'extraction du tube intérieur logé à l'intérieur du tube extérieur.

A des fins de concision, dans l'ensemble de la présente demande, un tube porte-échantillon peut être désigné par « tube PE », et un tube porte-instrumentation par « tube PI ».

Dans l'ensemble de la présente demande, les termes « inférieur », « supérieur », « vertical », « remontée », « descente », « dessous » et « dessus » sont à comprendre par référence, à un tube extérieur agencé à la verticale et une manutention par l'organe de préhension depuis le dessus de son extrémité supérieure. Ainsi, lors d'une manutention permettant l'introduction d'un tube intérieur dans un tube extérieur, l'organe de préhension effectue une descente.

### Etat de la technique

Pour tester le comportement des matériaux et des combustibles soumis à des sollicitations thermiques, neutroniques, voire chimiques représentatives du fonctionnement en vraie grandeur dans un réacteur nucléaire industriel, il est courant d'utiliser des réacteurs de recherche, outils indispensables dans la recherche et le développement de la filière électronucléaire.

Ces réacteurs nucléaires de recherche sont aussi couramment appelés réacteurs d'irradiation car ils permettent de réaliser des expériences d'irradiation d'échantillons de matériaux nucléaires, tels que des combustibles nucléaires, en piscine à proximité de ou dans le coeur du réacteur.

En particulier, le réacteur de recherche qui sera prochainement mis en service en France, le réacteur Jules Horowitz (RJH) va permettre d'étudier le comportement de combustibles nucléaires selon différents scénarios d'irradiation.

Pour mettre en oeuvre les expériences d'irradiation dans les réacteurs d'irradiation, des dispositifs d'irradiation sont conçus spécifiquement en fonction notamment de leur emplacement dédié dans le coeur et ou à proximité dans une zone de concentration d'un flux irradiant.

Dans le réacteur RJH, il est prévu un dispositif d'irradiation conçu particulièrement pour l'étude des combustibles nucléaires et des matériaux de gaine des crayons logeant les combustibles nucléaires.

Pour assurer la manipulation des échantillons de matériaux nucléaires dans les réacteurs nucléaires de recherche, il est connu d'utiliser en tant que porte-échantillon un tube à l'intérieur duquel est logé un échantillon tel qu'une colonne de pastilles de combustible nucléaires.

Plus précisément, un tube porte-échantillon (tube PE) comporte plusieurs portions tubulaires de section différente dont celle élargie de la portion supérieure, appelée ci-après tête de préhension, par laquelle la préhension du tube PE est effectuée pour sa manutention. L'échantillon à irradier est quant à lui agencé dans une portion du tube PE éloignée de la tête de préhension, de préférence à l'opposé de celle-ci, surtout lorsque l'échantillon est une colonne de pastilles de combustible irradiante. En configuration installée d'irradiation au sein du coeur ou à proximité, la portion du tube PE, dans laquelle est logée l'échantillon, doit être agencée dans une zone soumise au flux neutronique, dans les conditions exigées par l'expérience d'irradiation (T°, milieu...).

Pour assurer les mesures des paramètres physiques liées aux échantillons, il est prévu d'introduire le tube PE dans un tube borgne concentrique, appelée ci-après tube porte-instrumentation (tube PI), à l'intérieur duquel sont logés notamment des capteurs de mesure et un système de refroidissement. Un tube PI est arrimé à une pièce du dispositif d'irradiation.

En outre, pour répondre aux exigences de sureté, il est nécessaire d'assurer une étanchéité entre le tube PE qui constitue le tube intérieur, et le tube PI, qui constitue le tube extérieur afin de constituer une barrière de confinement, car le caloporteur du système de refroidissement circulant entre les tubes PI et PE à une pression élevée, typiquement d'au moins 160 bars, ne doit pas pouvoir s'échapper dans la piscine du réacteur d'irradiation. Autrement dit, en configuration installée d'irradiation, il est nécessaire d'avoir un verrouillage étanche du tube PE dans le tube PI.

Ainsi, au préalable d'une expérimentation irradiation, la manutention d'un tube PE nécessite sa préhension par un organe de préhension, la descente de l'organe de préhension et du tube PE pour l'introduction de ce dernier dans un tube PI, le verrouillage étanche mutuel entre ces deux tubes PE et PI et la remontée de l'organe de préhension seul.

En sens inverse, après une expérimentation d'irradiation, la manutention d'un tube PE logé dans le tube PI nécessite la descente de l'organe de préhension, la préhension du tube PE par l'organe de préhension, le déverrouillage le tube PE du tube PI puis la remontée de l'organe de préhension et du tube PE.

Egalement, pour répondre aux exigences de sureté, la préhension du tube PE par l'organe de préhension doit être assurée avec un verrouillage de la force de préhension.

Dans le domaine de la manutention de matériaux nucléaires ou substances radioactives, il est connu d'utiliser des systèmes de préhension (grappins) à pinces avec un verrouillage de l'effort des pinces et d'utiliser des crochets pour réaliser le verrouillage/déverrouillage de conteneurs ou fûts contenant soit des matériaux nucléaires soit des récipients contenant eux-mêmes des substances radioactives. L'utilisation de crochets en tant que moyens de verrouillage est souvent privilégiée car ils constituent une solution fiable et simple à réaliser, notamment avec peu de pièces mécaniques.

On peut citer ici la demande de brevet FR 2 725 188 qui décrit une solution d'accrochage d'un fût à couvercle à une porte d'enceinte à opercule, pour l'extraction d'objets radioactifs, selon laquelle le verrouillage/déverrouillage du couvercle à l'opercule est assuré au moyen de crochets montés pivotants dans l'opercule, et le verrouillage/déverrouillage du fût à l'enceinte étant assuré par des crochets appelés guignols montés pivotants sur la paroi de l'enceinte. Un inconvénient majeur de la solution décrite est qu'elle nécessite de fait l'agencement de deux systèmes de verrouillage/déverrouillage distincts, ce qui multiplie les pièces et par là les risques de grippage. En outre, avant l'accrochage proprement dit, la manutention du fût nécessite l'utilisation d'un plateau élévateur agencé en dessous. Or, dans l'application principale visée par l'invention, il ne peut être envisagé d'implanter un quelconque dispositif d'élévation en dessous des tubes PE et PI. Enfin, la mise en oeuvre complète de la solution décrite, c'est-à-dire pour enlever à la fois le couvercle et l'opercule afin d'exposer l'intérieur du fût au volume de l'enceinte, nécessite un grand nombre de manipulations, et donc des durées d'opérations. Or, dans le contexte d'un réacteur nucléaire de recherche, le remplacement d'un échantillon irradié par un échantillon neuf sans risque de rupture de confinement doit être simple et rapide à réaliser, afin d'augmenter le nombre d'expériences réalisables sur une période de temps donné avec un même tube PI.

La demande de brevet FR 2 906 638 décrit quant à elle un conteneur pour le transport d'un récipient contenant une substance radioactive, dans lequel le couvercle du conteneur est verrouillé/déverrouillé au corps du conteneur au moyen de crochets montés pivotants dans le couvercle, le pivotement des crochets pouvant être actionné soit par descente d'une poignée magnétique sur le couvercle aimanté, soit par pivotement d'une poignée mécanique montée pivotante sur le couvercle. Le système de préhension du couvercle soit par aimantation, soit par la poignée mécanique tel que décrit dans cette demande ne peut être réellement envisagé dans le contexte d'un réacteur nucléaire.

Il existe donc un besoin pour disposer d'un système de préhension d'un tube porte-échantillon et de verrouillage étanche/déverrouillage d'un tube porte-échantillon dans un tube porte-instrumentation au sein d'un réacteur nucléaire d'irradiation, avec verrouillage/déverrouillage de la force de préhension, qui soit fiable, simple de réalisation avec un nombre de pièces limitées, et rapide à mettre en oeuvre.

De manière plus générale, il existe un besoin pour disposer d'un système de préhension et de verrouillage/déverrouillage d'un tube intérieur dans un tube extérieur concentrique au tube intérieur, avec verrouillage/déverrouillage de la force de préhension qui soit notamment fiable, simple de réalisation avec un nombre de pièces limitées, et rapide à mettre en oeuvre.

La demande de brevet WO94/23236 décrit divulgue un dispositif de raccordement de tuyauterie de fluide sous pression dans lequel des crochets montés pivotants autour d'un tuyau mâle viennent s'accrocher autour d'une couronne périphérique d'un tuyau femelle dans lequel le tuyau mâle est emmanché.

Le brevet US 4716946 divulgue un dispositif de transfert de fluide, dans lequel l'extrémité inférieure d'un récipient portable d'oxygène liquide de type femelle vient s'engager autour d'un cylindre mâle d'une buse, une verrouillage mutuel entre récipient et buse étant prévu lors du transfert d'O₂ liquide.

La demande de brevet DE3636016 décrit un système de préhension d'un conteneur dans lequel une pince comporte une partie supérieure mobile par rapport à sa partie inférieure adaptée pour venir se loger dans un volume délimité par les rebords du conteneur, les parties inférieure et supérieure étant solidarisées mutuellement par des crochets pivotants en dehors de toute préhension.

La demande de brevet US 2008/265183 décrit un système de préhension d'un conteneur d'une capsule radioactive, comportant un organe de préhension dont la partie inférieure peut être actionnée par vissage afin d'assurer le déverrouillage des crochets coopérant avec le rebord du conteneur.

### Exposé de l'invention

L'invention vise à répondre à tout ou partie de ces besoins et a pour objet, selon l'un de ses aspects, un système de préhension et de verrouillage/déverrouillage, comportant un tube extérieur, un tube intérieur adapté pour être emmanché dans le tube extérieur, un organe de préhension avec une tête de préhension adaptée pour être logée dans le tube intérieur, dans lequel le tube extérieur et la tête de préhension comportent chacun à leur périphérie au moins une rainure, et dans lequel le tube intérieur comporte au moins un dispositif d'accrochage relié à son extrémité supérieure et au moins une encoche réalisée dans l'épaisseur du tube intérieur depuis son extrémité supérieure,
le dispositif d'accrochage comportant :
- un premier crochet, dit crochet de verrouillage, monté pivotant autour d'un axe orthogonal à l'axe longitudinal du tube intérieur, entre une position de verrouillage dans laquelle il est logé dans la rainure du tube extérieur pour assurer le verrouillage entre tubes intérieur et extérieur, et une position de déverrouillage dans laquelle il est distant de ladite rainure,
- un deuxième crochet, dit crochet de préhension, monté pivotant sur le premier crochet autour d'un axe orthogonal à l'axe longitudinal du tube intérieur, entre une position de préhension dans laquelle il est logé dans la rainure de la tête de préhension pour assurer la préhension du tube intérieur et au moins une position de libération dans laquelle il est distant de ladite rainure,
- un levier d'actionnement monté sur l'axe de pivotement du crochet de verrouillage entre une première position neutre dans laquelle il est distant de l'encoche et il ne fait pas saillie à l'intérieur du tube intérieur et une deuxième position neutre dans laquelle il est logé dans l'encoche, en passant par une position d'actionnement dans laquelle il fait saillie à l'intérieur du tube intérieur, le levier d'actionnement étant lié en rotation au crochet de verrouillage entre sa position d'actionnement et sa deuxième position neutre et libre en rotation par rapport au crochet de verrouillage entre sa première et deuxième positions neutres,
- un premier moyen de rappel élastique pour ramener le crochet de préhension d'une position de libération vers sa position de préhension,
le système étant configuré de sorte que :
- lorsque le tube intérieur est emmanché dans le tube extérieur en étant verrouillé à ce dernier par le crochet de verrouillage maintenu par le moyen de rappel, un déplacement en translation vers le bas de la tête de préhension dans le tube intérieur sur une course donnée (A), provoque un pivotement du levier d'actionnement de sa position d'actionnement vers sa deuxième position neutre et ainsi simultanément un pivotement du crochet de verrouillage de sa position de verrouillage à sa position de déverrouillage, puis un pivotement du crochet de préhension à la fois sous l'effet de son poids propre et élastique du premier moyen de rappel dans la rainure de la tête de préhension, assurant ainsi le déverrouillage entre tubes intérieur et extérieur puis la préhension du tube intérieur par la tête, en fin de course (A),
- lorsque la tête de préhension et le tube intérieur sont verrouillés mutuellement par le crochet de préhension, un déplacement en translation vers le bas de la tête de préhension et du tube intérieur dans le tube extérieur sur une course donnée (B), supérieure à la course (A), provoque la libération du crochet de préhension de la rainure de la tête puis un désengagement du levier d'actionnement de sa deuxième position neutre et ainsi simultanément un pivotement du crochet de verrouillage de sa position de déverrouillage à sa position de verrouillage sous l'effet au moins de son poids propre, assurant ainsi le déverrouillage entre tube intérieur et tête de préhension et le verrouillage mutuel entre tubes intérieur et extérieur, en fin de course B.

Autrement dit, l'invention consiste essentiellement en un système avec un ou plusieurs dispositifs d'accrochage qui permett(ent) à la fois le verrouillage étanche/déverrouillage du tube PE à l'organe de préhension avant et après les expérimentations d'irradiation en réacteur d'irradiation, et du tube PE dans le tube PI pour la réalisation de ces expérimentation, et ce avec seulement un déplacement en translation de l'organe de préhension selon la course A ou la course B.

Un tel système selon l'invention est particulièrement avantageux car il est simple à réaliser, fiable et rapide à mettre en oeuvre.

En configuration installée du tube PE dans le tube PI avec l'organe de préhension à distance, le verrouillage étanche du tube PE dans le tube PI réalisé par le système selon l'invention est robuste et permet de mettre sous une pression relativement élevée le caloporteur du système de refroidissement entre les tubes PE et PI, typiquement d'au moins 160 bars.

En outre, il permet une manutention fiable des échantillons de matériaux à l'aveugle, c'est-à-dire dans une configuration où il n'est pas possible de vérifier visuellement ou par tout autre moyen technologique, tel qu'une caméra, l'état verrouillé ou non des éléments. Il suffit en effet de contrôler la course atteinte (A, B) ou non par l'organe de préhension vers et dans le tube PE.

Le système selon l'invention peut être utilisé pour toute application dans laquelle il est nécessaire de réaliser une préhension et un verrouillage/déverrouillage d'un tube intérieur à loger dans un tube extérieur.

Selon une variante de réalisation avantageuse, le système comporte une pluralité de dispositifs d'accrochage reliés à l'extrémité supérieure du tube intérieur, les dispositifs d'accrochage étant répartis à la périphérie du tube intérieur pour assurer une répartition isostatique des efforts de verrouillage et de préhension. De préférence, selon cette variante, le système comporte trois dispositifs d'accrochage agencés à 120° l'un de l'autre par rapport à l'axe longitudinal du tube intérieur. On s'assure encore davantage de la fiabilité du système en répartissant ainsi les efforts mécaniques.

Selon une variante de réalisation avantageuse, le premier moyen de rappel élastique est constitué d'un ressort de torsion à spires monté autour de l'axe de pivotement du crochet de préhension avec ses deux spires d'extrémité fixes et une spire centrale d'appui conformée pour être en appui contre le crochet de préhension. Une telle variante est avantageuse car le ressort de torsion est simple à réaliser, à dimensionner et à mettre en place dans le dispositif d'accrochage.

Selon un mode de réalisation avantageux, le système comprend un deuxième moyen de rappel élastique pour ramener le crochet de verrouillage de sa position de déverrouillage vers sa position de verrouillage. Un tel mode est avantageux car il permet le rappel du crochet de verrouillage plus rapidement que sous l'effet uniquement de son poids propre. De préférence, le deuxième moyen de rappel élastique est constitué d'un ressort de torsion à spires monté autour de l'axe de pivotement du crochet de verrouillage, le ressort comportant deux spires d'extrémité reliées à l'extrémité supérieure du tube intérieur et une spire centrale d'appui conformée pour être en appui contre le crochet de verrouillage.

De préférence, le crochet de verrouillage est constitué d'un doigt de formes complémentaires avec la rainure du tube extérieur, et d'un étrier sensiblement en forme de V relié au doigt et à l'intérieur duquel est monté le crochet de préhension.

Selon une première variante de réalisation, la rainure du tube extérieur s'étend sur toute la périphérie de ce dernier.

Alternativement, selon une deuxième variante de réalisation, il peut être prévu au moins une rainure du tube extérieur s'étendant sur une partie de ce dernier.

Selon une variante de réalisation, la rainure de la tête de préhension s'étend sur toute la périphérie de cette dernière.

Le levier d'actionnement est avantageusement constitué par un ergot, simple à réaliser.

Selon un mode de réalisation avantageux, lorsqu'on souhaite obtenir un verrouillage étanche, notamment en vue d'une mise sous pression entre tubes intérieur et extérieur, le tube intérieur et/ou le tube extérieur peu(ven)t comporter avantageusement un ou plusieurs joints d'étanchéité pour réaliser un assemblage avec étanchéité entre eux. Il peut s'agir de joints à section torique logés dans des gorges sur toute la périphérie de l'un et/ou l'autre de tubes.

L'organe de préhension et le(s) dispositif(s) d'accrochage sont dimensionnés pour vaincre les efforts de frottement du (des) joint(s) lors de l'introduction ou l'extraction du tube intérieur dans ou depuis le tube extérieur. Typiquement, pour des tubes PE et PI envisagés dans le réacteur d'irradiation RJH, avec une mise sous pression du caloporteur du système de refroidissement à une pression de 175 bars, l'organe de préhension et le(s) dispositif(s) d'accrochage doivent être dimensionnés pour vaincre des efforts de frottement de joints de l'ordre de 1370N.

Le tube intérieur peut constituer un tube porte-échantillon de matière et le tube extérieur peut constituer un porte-instrumentation de mesure.

Pour l'application principale visée par l'invention, le système constitue un système d'introduction et d'extraction d'un tube porte-échantillon destiné à loger un échantillon de matériaux nucléaires, tels que des combustibles nucléaires, dans un tube porte-instrumentation de mesure destiné à loger des capteurs de mesure et un système de refroidissement.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue schématique en configuration installée d'irradiation d'un tube porte-échantillon (PE) dans un tube porte-instrumentation (PI) dans un réacteur nucléaire de recherche;
- la figure 2 est une vue schématique en éclaté partiel d'un dispositif d'accrochage relié à un tube intérieur conformément à l'invention;
- la figure 3 est une vue schématique de l'intérieur du tube intérieur montrant un détail du dispositif d'accrochage selon l'invention avec le moyen de rappel facultatif de son crochet de verrouillage;
- les figures 4A à 4J sont des vues en perspective et en coupe montrant les différentes étapes de préhension du tube intérieur par l'organe de préhension simultanément avec le déverrouillage entre tubes intérieur et extérieur selon l'invention ;
- les figures 5A à 5J sont des vues en perspective et en coupe montrant les différentes étapes de libération du tube intérieur de l'organe de préhension simultanément avec le verrouillage entre tubes intérieur et extérieur selon l'invention ;
- la figure 6 est une vue schématique en perspective montrant les tubes intérieur et extérieur verrouillés entre eux conformément à l'invention, l'organe de préhension étant à proximité;
- la figure 7 est une vue en coupe montrant le détail de l'étanchéité réalisée entre tubes intérieur et extérieur verrouillés entre eux.

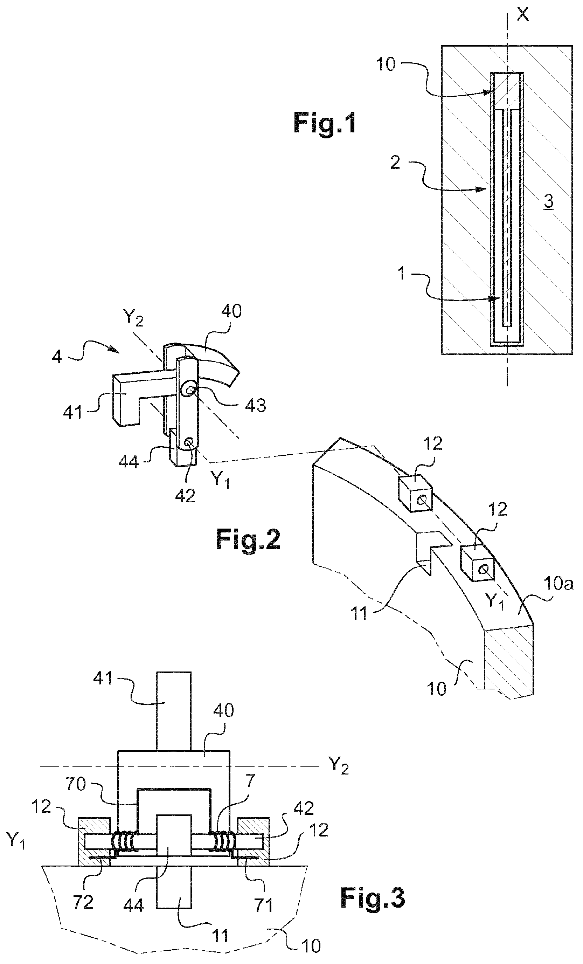

On a représenté en figure 1, un tube intérieur 1, 10 d'axe longitudinal X constituant un tube porte-échantillon destiné à loger un échantillon de matériaux nucléaires, tels que des combustibles nucléaires, tel qu'il doit être verrouillé dans un tube extérieur 2 constituant un porte-instrumentation de mesure destiné à loger des capteurs de mesure et un système de refroidissement, à des fins de expérimentations d'irradiation dans une piscine en eau 3 d'un réacteur de recherche nucléaire. Plus précisément, le tube intérieur 1 comporte une portion inférieure tubulaire dans laquelle est logé un échantillon de matériaux nucléaires, tel qu'une colonne de pastilles de combustible nucléaire, et une portion supérieure tubulaire 10 par laquelle la préhension par un organe de préhension 6 est réalisée.

Au préalable de toute expérimentation d'irradiation, le tube intérieur 1 doit pouvoir être amené en étant introduit dans le tube extérieur 2 par descente d'un organe de préhension, puis verrouillé au tube extérieur 2, l'organe de préhension devant être libéré du tube intérieur 1 afin de pouvoir être remonté.

Après une ou plusieurs expérimentations d'irradiation, le tube intérieur 1 doit pouvoir être déverrouillé de l'intérieur du tube extérieur 2 dans lequel il est logé, l'organe de préhension doit pouvoir saisir le tube intérieur 1 déverrouillé et remonter avec ce dernier pour l'extraire de la piscine 3.

Selon l'invention, un système avec au moins un dispositif d'accrochage 4 est prévu pour réaliser d'une part la libération du tube intérieur 1 par l'organe de préhension 6 et selon un même déplacement de l'organe de préhension 6, le verrouillage étanche du tube intérieur 1 au tube extérieur 2 et d'autre part, le déverrouillage du tube intérieur 1 logé dans le tube extérieur 2 et selon un même déplacement de l'organe de préhension 6, la préhension du tube intérieur 1 par l'organe de préhension 6.

Conformément à l'invention, le tube extérieur 2 et l'organe de préhension 6 comportent chacun une rainure respectivement 20, 60. Le tube intérieur 1, 10 comporte au moins une encoche 11 à son extrémité supérieure 10a. La tête de préhension de l'organe de préhension 6 a un diamètre externe ajusté au diamètre interne du tube intérieur 1.

Un dispositif d'accrochage 4 selon l'invention est relié à l'extrémité supérieure 10a du tube intérieur 10. Le dispositif d'accrochage est constitué par un double crochet 40, 41 dont l'un 40 est monté pivotant autour d'un axe 42, Y1 orthogonal à l'axe longitudinal X du tube intérieur. Tel que montré en figures 2 et 3, cet axe 42 peut être monté dans deux ergots 12 distants l'une de l'autre, eux-mêmes fixés sur l'extrémité supérieure 10a du tube intérieur 1, 10. Les deux ergots peuvent être réalisés d'une seule pièce avec le tube intérieur 1, 10.

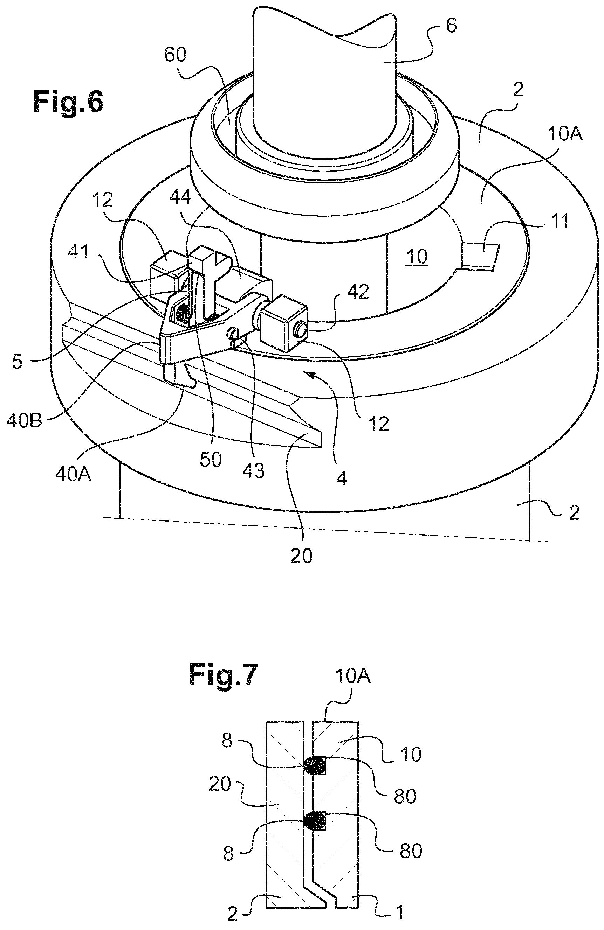

Plus précisément, le dispositif d'accrochage 4 comporte tout d'abord un crochet de verrouillage 40 monté pivotant autour de l'axe 42, Y1 orthogonal à l'axe longitudinal X du tube intérieur, entre une position de verrouillage dans laquelle il est logé dans la rainure 20 du tube extérieur 2 pour assurer le verrouillage de ce dernier avec le tube intérieur 1, et une position de déverrouillage dans laquelle il est distant de ladite rainure 20. Tel que représenté en figure 6, le crochet de verrouillage 40 peut être constitué d'un doigt 40a de formes complémentaires avec la rainure 20 du tube extérieur 2, et d'un étrier 40b sensiblement en forme de V relié au doigt 40a.

Le dispositif d'accrochage 4 comporte également un crochet de préhension 41 monté pivotant sur le crochet de verrouillage autour d'un axe 43, Y2 également orthogonal à l'axe longitudinal X du tube intérieur 1, entre une position de préhension dans laquelle il est logé dans la rainure 60 de la tête de préhension 6 pour assurer la préhension du tube intérieur et au moins une position de libération dans laquelle il est distant de ladite rainure 60. Tel que représenté en figure 6, le crochet de préhension 41 peut être monté à l'intérieur de l'étrier 40b du crochet de verrouillage 40.

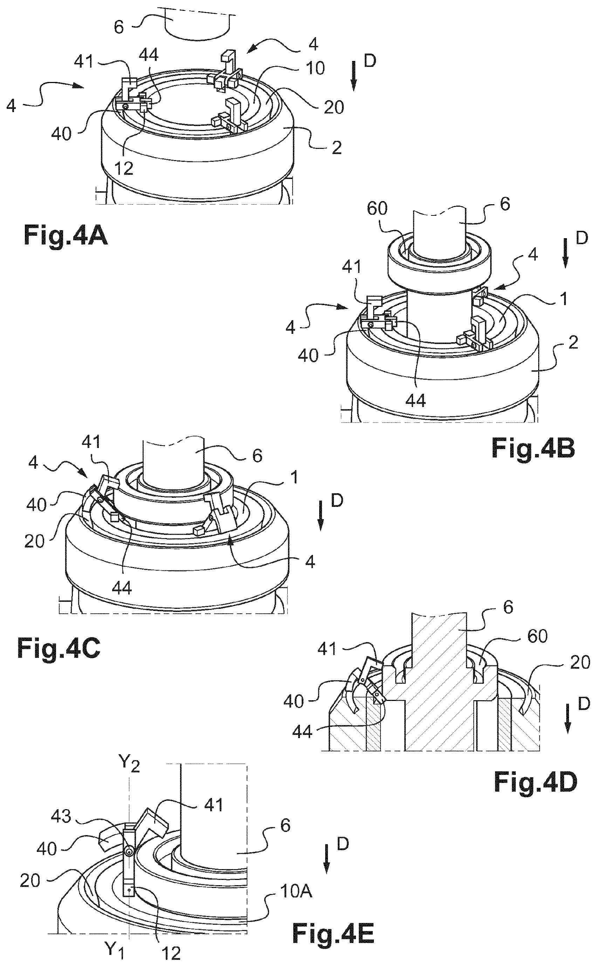

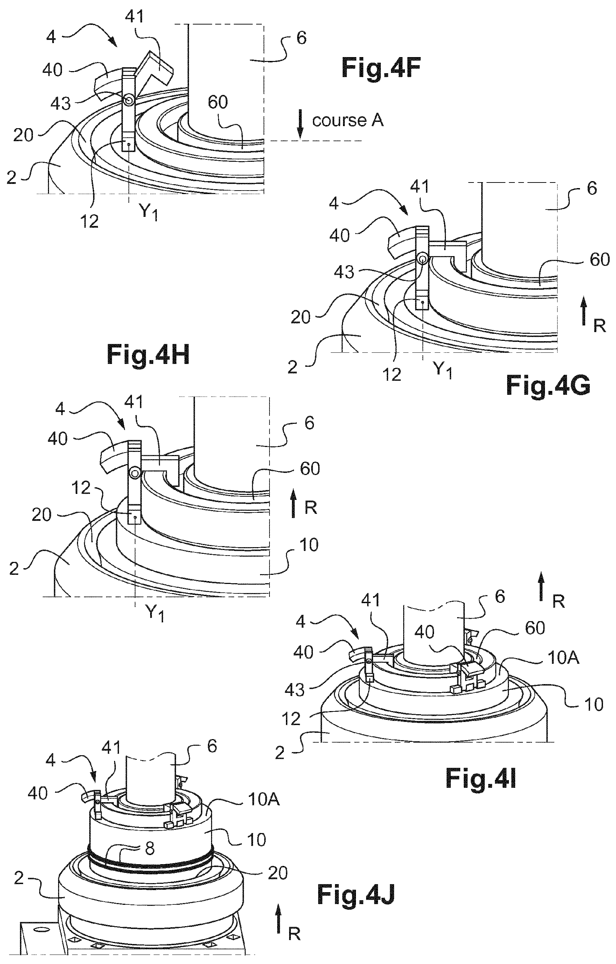

Le dispositif d'accrochage 4 comporte également un levier d'actionnement 44 monté sur l'axe Y1 de pivotement du crochet de verrouillage 40 entre une première position neutre dans laquelle il est distant de l'encoche et il ne fait pas saillie à l'intérieur du tube intérieur 1 et une deuxième position neutre dans laquelle il est logé dans l'encoche 11, en passant par une position d'actionnement dans laquelle il fait saillie à l'intérieur du tube intérieur 1. Le levier d'actionnement 44 est lié en rotation au crochet de verrouillage 40 entre sa position d'actionnement et sa deuxième position neutre et, libre en rotation par rapport au crochet de verrouillage 40 entre ses première et deuxième positions neutres, comme explicité par la suite en référence aux figures 4A à 4I. Tel qu'illustré dans l'ensemble des figures, le levier d'actionnement peut consister en un simple ergot 44 dans le prolongement du crochet de verrouillage 40.

Le système de préhension et verrouillage/déverrouillage selon l'invention comporte enfin un moyen de rappel élastique 5 pour ramener le crochet de préhension 41 d'une position de libération vers sa position de préhension. Tel qu'illustré en figure 6, le moyen de rappel élastique peut avantageusement consister en un ressort de torsion à spires 5 monté autour de l'axe 43, Y2 de pivotement du crochet de préhension 41 avec ses deux spires d'extrémité fixes et une spire centrale 50 d'appui conformée pour être en appui contre le crochet de préhension 41.

Le système selon l'invention peut en outre comporter un moyen de rappel élastique 7 supplémentaire pour ramener le crochet de verrouillage 40 de sa position de déverrouillage vers sa position de verrouillage. Tel qu'illustré en figure 3, ce moyen de rappel élastique 7 supplémentaire peut être avantageusement étant constitué d'un ressort de torsion à spires 7 monté autour de l'axe de pivotement 42, Y1 du crochet de verrouillage 40 avec ses deux spires d'extrémité 51, 52 fixes et une spire centrale 70 d'appui conformée pour être en appui contre le crochet de verrouillage 40.

Dans le mode de réalisation illustré des figures 4A à 5J, le système selon l'invention comporte trois dispositifs d'accrochage 4 tels que celui décrit, agencés à 120° l'un de l'autre par rapport à l'axe longitudinal (X) du tube intérieur. Un tel mode est avantageux car il permet une répartition isostatique des efforts de préhension et de verrouillage. Dans ce même mode de réalisation, les rainures 20, 60 respectivement du tube extérieur 2 et de l'organe de préhension 6 sont réalisées chacune sur toute la périphérie de ces deniers.

Dans le mode de réalisation illustré de la figure 6, le système selon l'invention comporte un seul dispositif d'accrochage 4 tel qu'il vient d'être décrit. Dans ce même mode, il est prévu que la rainure 20 soit réalisée sur une portion périphérique seulement du tube extérieur 2.

On précise ici que les flèches D indiquent une descente de l'organe de préhension 6, tandis que les flèches R indiquent une remontée de l'organe de préhension 6.

On précise également que la course A désigne la course atteinte par l'organe de préhension 6 en fin de descente lors de la préhension du tube intérieur 1 verrouillé au tube extérieur 2 (figures 4A à 4J).

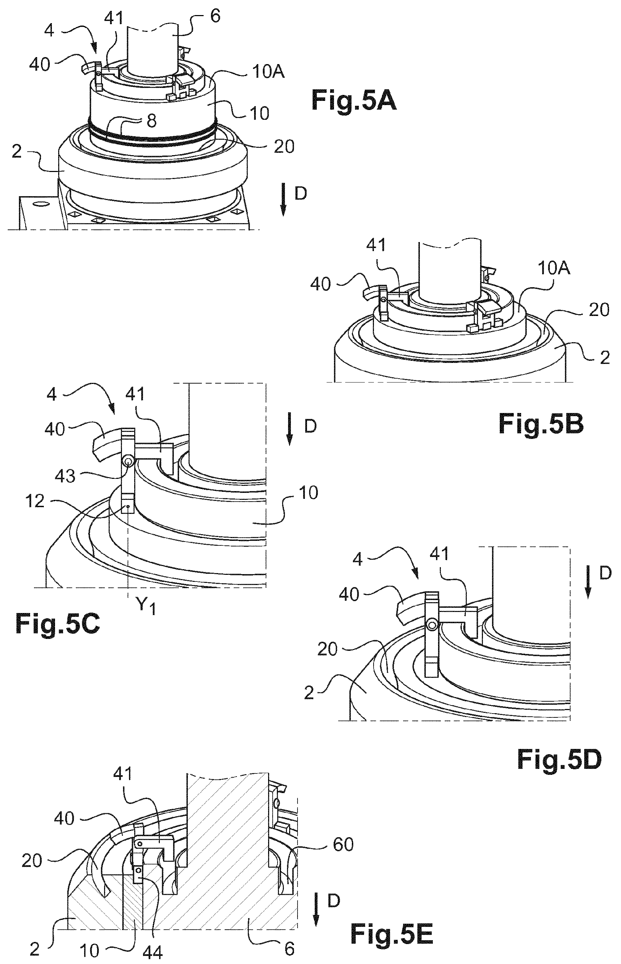

La course B désigne quant à elle la course atteinte par l'organe de préhension 6 en fin de descente lors de la libération du tube intérieur 1 et le verrouillage de ce dernier au tube extérieur 2 (figures 5A à 5J).

On décrit maintenant la cinématique de la préhension du tube intérieur 1 par l'organe de préhension 6 et dans un même déplacement de l'organe de préhension 6, le déverrouillage entre tubes intérieur 1 et extérieur 2 que la configuration du système selon l'invention permet.

Lorsque les tubes intérieur 1 et extérieur 2 sont verrouillés mutuellement par le crochet de verrouillage 40 et que l'on souhaite extraire le tube intérieur 1, on fait descendre l'organe de préhension (figures 4A et 4B).

Lors de sa descente, lorsque l'organe de préhension 6 vient en butée contre le levier d'actionnement 44, ce dernier pivote et le crochet de verrouillage 40, lié en rotation au levier 44, pivote simultanément autour de l'axe Y1 vers l'intérieur des tubes 1, 2 de sa position de verrouillage vers sa position de déverrouillage (figure 4C-4D). Du fait de son contact avec la surface extérieure de la tête de préhension, le crochet de préhension 41 pivote selon un angle de quelques degrés vers l'extérieur des tubes.

On continue la descente de l'organe de préhension 6, ce qui provoque le logement du levier d'actionnement 44 dans sa position neutre dans l'encoche 11 et simultanément la libération complète du crochet de verrouillage 40 de la rainure 20 du tube extérieur 2, c'est-à-dire dans une position de déverrouillage (figure 4 E). Le déverrouillage du tube intérieur 1 du tube extérieur est effectivement réalisé. Dans cette position, le crochet de préhension 41 commence à pivoter vers la rainure 60 de l'organe de préhension 6 sous l'effet de son poids propre et du ressort de torsion 5 qui ramène ledit crochet 41 vers l'intérieur des tubes 1, 2.

La descente de l'organe de préhension est alors interrompue en bout de course A, le crochet de préhension 41 continuant de pivoter vers l'intérieur du tube 1 vers sa position de préhension (figure 4F).

On peut alors commencer la remontée de l'organe de préhension 6, le pivotement du crochet de préhension 41 continuant jusqu'à ce qu'il ait pénétré la rainure 60 de l'organe de préhension 6, c'est-à-dire atteint sa position de préhension (figure 4G). La préhension et le verrouillage du tube intérieur 1 à l'organe de préhension 6 sont alors effectivement réalisés, et le déverrouillage du tube intérieur 1 par rapport au tube extérieur 2 est également réalisé. Ainsi, lors de la préhension du tube intérieur, l'opérateur est assuré contre les risques d'endommagement du système de préhension, du tube intérieur lui-même ou de la liaison entre les deux. Ce point est particulièrement important lorsque les opérations sont réalisées à l'aveugle, par exemple à travers une dalle ou un couvercle opaque, comme cela sera le cas dans le réacteur d'irradiation RJH. La gestion des deux courses A et B, par exemple en les intégrant dans un automatisme, permet d'assurer la sécurité de ces opérations.

La remontée de l'organe de préhension 6 est alors continuée (figures 4H à 4J). L'organe de préhension et le(s) dispositif(s) d'accrochage 4 sont dimensionnés pour vaincre les efforts de frottement du (des) joint(s) 8 logés à l'intérieur de gorges 80 à la périphérie du tube intérieur 1 lors de l'extraction de ce dernier du tube extérieur 2 (figure 4J).

On décrit maintenant la cinématique du verrouillage étanche du tube intérieur 1 dans le tube extérieur 2 et dans un même déplacement de l'organe de préhension 6, la libération du tube intérieur 1 de ce dernier que la configuration du système selon l'invention permet.

Lorsque le tube intérieur 1 est saisi par l'organe de préhension et verrouillé à ce dernier par le crochet de préhension 41 dans sa position de préhension et que l'on souhaite verrouiller le tube intérieur 1 au tube extérieur 2, on fait descendre l'organe de préhension 6 (figures 5A et 5B). L'organe de préhension 6 et le(s) dispositif(s) d'accrochage 4 sont dimensionnés pour vaincre les efforts de frottement du (des) joint(s) 8 logés à l'intérieur de gorges 80 à la périphérie du tube intérieur 1 lors de l'introduction de ce dernier dans le tube extérieur 2 (figure 5A).

Une fois, l'introduction du tube intérieur 1 dans le tube extérieur 2 commencée, on continue la descente de l'organe de préhension 6 (figure 5C), jusqu'à la mise en butée vers le bas du tube intérieur 1 (figure 5D). Dans cette position, l'extrémité supérieure 10a du tube intérieur 1 est au niveau de celle du tube extérieur 2.

On continue la descente de l'organe de préhension, ce qui provoque la libération du crochet de préhension 41 de la rainure 60 de l'organe de préhension 6 (figure 5 E).

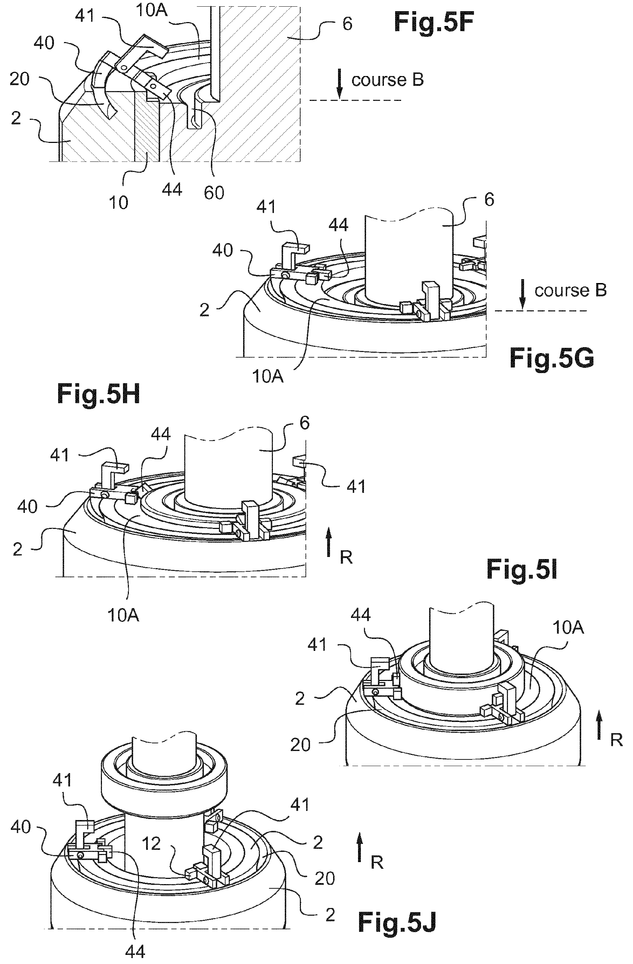

La descente de l'organe de préhension 6 est continuée jusqu'à ce que la course B supérieure à la course A soit atteinte (figure 5F). Dans cette position, le levier d'actionnement 44 n'est plus maintenu dans sa position neutre dans l'encoche 11 par l'organe de libération 6.

Le crochet de verrouillage 40 pivote alors autour de l'axe Y1 sous l'effet de son poids propre et du ressort à torsion 7 vers l'extérieur des tubes 1, 2, ce qui provoque simultanément le pivotement du levier d'actionnement 44 lié en rotation au crochet de verrouillage 40 et également le pivotement du crochet de préhension 41 jusqu'à sa position de libération maintenue par le ressort à torsion 5. Le pivotement du crochet de verrouillage 40 continue jusqu'à celui-ci ait atteint sa position de verrouillage (figure 5G). Dans cette position, le verrouillage effectif entre tubes intérieur 1 et extérieur 2 est effectivement réalisé par le crochet de verrouillage 40.

On réalise alors une remontée de l'organe de préhension 6, ce qui provoque le pivotement vers le haut du levier d'actionnement 44 de sa position d'actionnement (figure 5G) vers sa position neutre (figure 5H) dans laquelle il ne fait pas saillie à l'intérieur du tube intérieur 1 (figure 5I).

La remontée de l'organe de préhension 6 peut alors continuer, le levier d'actionnement 44 effectuant un pivotement vers le bas sous son poids propre jusqu'à revenir à sa position d'actionnement initiale (figure 5J).

L'invention n'est pas limitée aux exemples qui viennent d'être décrits ; on peut notamment combiner entre elles des caractéristiques des exemples illustrés au sein de variantes non illustrées.

Ainsi, par exemple la forme en L du crochet de préhension 41 montrée peut être modifiée, tout comme celle du crochet de verrouillage 40 et de l'ergot d'actionnement 44.

Par ailleurs, le nombre de dispositifs d'accrochage 4 peut être augmenté, notamment pour vaincre des efforts de joints d'étanchéité 8 supérieurs.

## Revendications

1. Système de préhension et de verrouillage/déverrouillage, comportant un tube extérieur (2), un tube intérieur (1, 10) adapté pour être emmanché dans le tube extérieur, un organe de préhension (6) avec une tête de préhension adaptée pour être logée dans le tube intérieur (1), dans lequel le tube extérieur et la tête de préhension comportent chacun à leur périphérie au moins une rainure (20, 60), et dans lequel le tube intérieur comporte au moins un dispositif d'accrochage (4) relié à son extrémité supérieure (10A) et au moins une encoche (11) réalisée dans l'épaisseur du tube intérieur depuis son extrémité supérieure, le dispositif d'accrochage comportant:
- un premier crochet, dit crochet de verrouillage (40), monté pivotant autour d'un axe (42) orthogonal à l'axe longitudinal (X) du tube intérieur, entre une position de verrouillage dans laquelle il est logé dans la rainure (20) du tube extérieur (2) pour assurer le verrouillage entre tubes intérieur et extérieur, et une position de déverrouillage dans laquelle il est distant de ladite rainure,
- un deuxième crochet, dit crochet de préhension (41), monté pivotant sur le premier crochet (40), autour d'un axe (43) orthogonal à l'axe longitudinal (X) du tube intérieur, entre une position de préhension dans laquelle il est logé dans la rainure (60) de la tête de préhension (6) pour assurer la préhension du tube intérieur et au moins une position de libération dans laquelle il est distant de ladite rainure,
- un levier d'actionnement (44) monté sur l'axe (42) de pivotement du crochet de verrouillage entre une première position neutre dans laquelle il est distant de l'encoche (11) et il ne fait pas saillie à l'intérieur du tube intérieur et une deuxième position neutre dans laquelle il est logé dans l'encoche (11), en passant par une position d'actionnement dans laquelle il fait saillie à l'intérieur du tube intérieur (1), le levier d'actionnement (44) étant lié en rotation au crochet de verrouillage (40) entre sa position d'actionnement et sa deuxième position neutre et libre en rotation par rapport au crochet de verrouillage entre sa première et deuxième positions neutres,
- un premier moyen de rappel élastique (5) pour ramener le crochet de préhension (41) d'une position de libération vers sa position de préhension,
le système étant configuré de sorte que :
• lorsque le tube intérieur (1) est emmanché dans le tube extérieur (2) en étant verrouillé à ce dernier par le crochet de verrouillage (40), un déplacement en translation vers le bas de la tête de préhension (6) dans le tube intérieur (1) sur une course donnée (A), provoque un pivotement du levier d'actionnement (44) de sa position d'actionnement vers sa deuxième position neutre et ainsi simultanément un pivotement du crochet de verrouillage (40) de sa position de verrouillage à sa position de déverrouillage, puis un pivotement du crochet de préhension (41) à la fois sous l'effet de son poids propre et élastique du premier moyen de rappel (5) dans la rainure (60) de la tête de préhension, assurant ainsi le déverrouillage entre tubes intérieur et extérieur puis la préhension du tube intérieur par la tête, en fin de course (A),
• lorsque la tête de préhension (6) et le tube intérieur (1) sont verrouillés mutuellement par le crochet de préhension (41), un déplacement en translation vers le bas de la tête de préhension et du tube intérieur dans le tube extérieur sur une course donnée (B), supérieure à la course (A), provoque la libération du crochet de préhension (41) de la rainure (60) de la tête puis un désengagement du levier d'actionnement (44) de sa deuxième position neutre et ainsi simultanément un pivotement du crochet de verrouillage (40) de sa position de déverrouillage à sa position de verrouillage sous l'effet au moins de son poids propre, assurant ainsi le déverrouillage entre tube intérieur (1) et tête de préhension et le verrouillage mutuel entre tubes intérieur et extérieur, en fin de course B.

2. Système de préhension et de verrouillage/déverrouillage selon la revendication 1, comportant une pluralité de dispositifs d'accrochage (4) reliés à l'extrémité supérieure du tube intérieur (1), les dispositifs d'accrochage étant répartis à la périphérie du tube intérieur pour assurer une répartition isostatique des efforts de verrouillage et de préhension.

3. Système de préhension et de verrouillage/déverrouillage selon la revendication 2, comportant trois dispositifs d'accrochage (4) agencés à 120° l'un de l'autre par rapport à l'axe longitudinal (X) du tube intérieur.

4. Système de préhension et de verrouillage/déverrouillage selon l'une des revendications précédentes, le premier moyen de rappel élastique (5) étant constitué d'un ressort de torsion à spires monté autour de l'axe (43) de pivotement du crochet de préhension 41 avec ses deux spires d'extrémité fixes et une spire centrale (50) d'appui conformée pour être en appui contre le crochet de préhension (41).

5. Système de préhension et de verrouillage/déverrouillage selon l'une des revendications précédentes, comprenant un deuxième moyen de rappel élastique (7) pour ramener le crochet de verrouillage (40) de sa position de déverrouillage vers sa position de verrouillage.

6. Système de préhension et de verrouillage/déverrouillage selon la revendication 5, le deuxième moyen de rappel élastique étant constitué d'un ressort de torsion à spires (17) monté autour de l'axe de pivotement (42) du crochet de verrouillage (41) avec ses deux spires d'extrémité (71, 72) fixes et une spire centrale d'appui (70) conformée pour être en appui contre le crochet de verrouillage (40).

7. Système de préhension et de verrouillage/déverrouillage selon l'une des revendications précédentes, le crochet de verrouillage étant constitué d'un doigt (40a) de formes complémentaires avec la rainure (20) du tube extérieur (2), et d'un étrier (40b) sensiblement en forme de V relié au doigt et à l'intérieur duquel est monté le crochet de préhension (41).

8. Système de préhension et de verrouillage/déverrouillage selon l'une des revendications précédentes, dans lequel la rainure (20) du tube extérieur (2) s'étend sur toute la périphérie de ce dernier.

9. Système de préhension et de verrouillage/déverrouillage selon l'une des revendications 1 à 8, comportant au moins une rainure (20) du tube extérieur (2) s'étendant sur une partie de ce dernier.

10. Système de préhension et de verrouillage/déverrouillage selon l'une des revendications précédentes, dans lequel la rainure (60) de la tête de préhension (6) s'étend sur toute la périphérie de cette dernière.

11. Système de préhension et de verrouillage/déverrouillage selon l'une des revendications précédentes, le levier d'actionnement (44) étant constitué par un ergot.

12. Système de préhension et de verrouillage/déverrouillage selon l'une des revendications précédentes, le tube intérieur (1) et/ou le tube extérieur (2) comportant un ou plusieurs joints d'étanchéité pour réaliser un assemblage avec étanchéité entre eux.

13. Système de préhension et de verrouillage/déverrouillage selon la revendication 12, l'organe de préhension et le(s) dispositif(s) d'accrochage étant dimensionnés pour vaincre les efforts de frottement du (des) joint(s) (8) lors de l'introduction ou l'extraction du tube intérieur dans ou depuis le tube extérieur.

14. Système de préhension et de verrouillage/déverrouillage selon l'une des revendications précédentes, le tube intérieur constituant un tube porte-échantillon de matière, le tube extérieur constituant un porte-instrumentation de mesure.

15. Système de préhension et de verrouillage/déverrouillage selon la revendication 14, constituant un système d'introduction et d'extraction d'un tube porte-échantillon destiné à loger un échantillon de matériaux nucléaires, tels que des combustibles nucléaires, dans un tube porte-instrumentation de mesure destiné à loger des capteurs de mesure et un système de refroidissement.

## Patentansprüche

1. Greif- und Ver-/ Entriegelungssystem, umfassend ein äußeres Rohr (2), ein inneres Rohr (1, 10), das angepasst ist in das äußere Rohr eingesetzt zu werden, ein Greiforgan (6) mit einem Greifkopf, der angepasst ist, im inneren Rohr (1) aufgenommen zu werden, wobei das äußere Rohr und der Greifkopf jeweils an ihrem Umfang mindestens eine Nut (20, 60) umfassen, und wobei das innere Rohr mindestens eine Einrastvorrichtung (4) verbunden an seinem oberen Ende (10A) und mindestens eine Einkerbung (11) ausgeführt in der Stärke des inneren Rohrs ab seinem oberen Ende umfasst,
die Einrastvorrichtung umfassend:
- einen ersten Haken, bezeichnet als Verriegelungshaken (40), der schwenkbar um eine Achse (42) orthogonal zur Längsachse (X) des inneren Rohrs zwischen einer Verriegelungsposition, in der er in der Nut (20) des äußeren Rohrs (2) aufgenommen ist, um die Verriegelung zwischen dem inneren und äußeren Rohr sicherzustellen, und einer Entriegelungsposition, in der er von dieser Nut entfernt ist, montiert ist;
- einen zweiten Haken (41), der schwenkbar am ersten Haken (40) um eine Achse (43) orthogonal zur Längsachse (X) des inneren Rohrs zwischen einer Greifposition, in der er in der Nut (60) des Greifkopfs (6) aufgenommen ist, um das Greifen des inneren Rohrs sicherzustellen, und mindestens einer Freigabeposition, in der er von dieser Nut entfernt ist, montiert ist,
- einen Betätigungshebel (44), montiert auf der Schwenkachse (42) des Verriegelungshakens zwischen einer ersten neutralen Position, in der er von der Einkerbung (11) entfernt ist und nicht in die Innenseite des inneren Rohrs hervorsteht, und einer zweiten neutralen Position, in der er in der in der Einkerbung (11) aufgenommen ist, verlaufend durch eine Betätigungsposition, in der er in die Innenseite des inneren Rohrs (1) hervorsteht, wobei der Betätigungshebel (44) drehend mit dem Verriegelungshaken (40) zwischen seiner Betätigungsposition und seiner zweiten neutralen Position verbunden ist, und in Bezug auf den Verriegelungshaken zwischen seiner ersten und zweiten neutralen Position frei drehen kann,
- ein erstes elastisches Rückstellmittel (5), um den Greifhaken (41) aus einer Freigabeposition auf seine Greifposition zurückzustellen,
wobei das System derart konfiguriert ist, dass:
• wenn das innere Rohr (1) im äußeren Rohr (2) eingesetzt und durch den Verriegelungshaken (40) an dieses letztere verriegelt ist, eine Übertragungsbewegung zur Unterseite des Greifkopfs (6) im inneren Rohr (1) über einen gegebenen Weg (A) ein Schwenken des Betätigungshebels (44) aus seiner Betätigungsposition zu seiner zweiten neutralen Position und somit gleichzeitig ein Schwenken des Verriegelungshakens (40) aus seiner Verriegelungsposition auf seine Entriegelungsposition, dann ein gleichzeitiges Schwenken des Greifhakens (41) unter der Wirkung seines eigenen Gewichts und der elastischen Wirkung des ersten Rückstellmittels (5) in der Nut (60) des Greifkopfs bewirkt, womit die Verriegelung zwischen dem inneren und äußeren Rohr nach dem Greifen des inneren Rohrs durch den Kopf am Ende des Wegs (A) sichergestellt ist,
• wenn der Greifkopf (6) und das innere Rohr (1) gegenseitig durch den Greifhaken (41) verriegelt sind, eine Übertragungsbewegung zur Unterseite des Greifkopfs (6) und des inneren Rohrs im äußeren Rohr über einen gegebenen Weg (B), der größer als der Weg (A) ist, die Freigabe des Greifhakens (41) aus der Nut (60) des Kopfs, dann ein Lösen des Betätigungshebels (44) aus seiner zweiten neutralen Position und somit gleichzeitig ein Schwenken des Verriegelungshakens (40) aus seiner Entriegelungsposition auf seine Verriegelungsposition unter der Wirkung von mindestens seinem Eigengewicht bewirkt, womit die Entriegelung zwischen dem inneren Rohr (1) und dem Greifkopf und die gegenseitige Verriegelung zwischen dem inneren und äußeren Rohr am Ende des Wegs B sichergestellt ist.

2. Greif- und Ver-/ Entriegelungssystem nach Anspruch 1, umfassend eine Vielzahl von Einrastvorrichtungen (4) verbunden am oberen Ende des inneren Rohrs (1), wobei die Einrastvorrichtungen am Umfang des inneren Rohrs verteilt sind, um eine isostatische Verteilung der Verriegelungs- und Greifkräfte zu gewährleisten.

3. Greif- und Ver-/ Entriegelungssystem nach Anspruch 2, umfassend drei Einrastvorrichtungen (4) angeordnet in einem Winkel von 120° untereinander in Bezug auf die Längsachse (X) des inneren Rohrs.

4. Greif- und Ver-/ Entriegelungssystem nach einem der vorherigen Ansprüche, wobei das erste elastische Rückstellmittel (5) aus einer gewundenen Drehfeder besteht, die um die Schwenkachse (43) des Greifhakens (41) montiert ist, und deren zwei letzten Windungen feststehend sind und eine mittlere Stützwindung (50) geformt ist, um sich gegen den Greifhaken (41) abzustützen.

5. Greif- und Ver-/ Entriegelungssystem nach einem der vorherigen Ansprüche, umfassend ein zweites elastisches Rückstellmittel (7), um den Verriegelungshaken (40) aus seiner Entriegelungsstellung auf seine Verriegelungsstellung zurückzustellen.

6. Greif- und Ver-/ Entriegelungssystem nach Anspruch 5, wobei das zweite elastische Rückstellmittel aus einer gewundenen Drehfeder (17) besteht, die um die Schwenkachse (42) des Verriegelungshakens (41) montiert ist, deren zwei letzten Windungen (71, 72) feststehend sind und eine mittlere Stützwindung (70) geformt ist, um sich gegen den Verriegelungshaken (40) abzustützen.

7. Greif- und Ver-/ Entriegelungssystem nach einem der vorherigen Ansprüche, wobei der Verriegelungshaken aus einem Finger (40a) mit ergänzenden Formen mit der Nut (20) des äußeren Rohrs (2) besteht, und aus einem Bügel (40b) mit einer im Wesentlichen V-Form, verbunden mit dem Finger, auf dessen Innenseite der Greifhaken (41) montiert ist.

8. Greif- und Ver-/ Entriegelungssystem nach einem der vorherigen Ansprüche, wobei die Nut (20) des äußeren Rohrs (2) sich an dessen gesamten Umfang erstreckt.

9. Greif- und Ver-/ Entriegelungssystem nach einem der Ansprüche 1 bis 8, umfassend mindestens eine Nut (20) des äußeren Rohrs (2), die sich über einen Teil des äußeren Rohrs erstreckt.

10. Greif- und Ver-/ Entriegelungssystem nach einem der vorherigen Ansprüche, wobei die Nut (60) des Greifkopfs (6) sich über dessen gesamten Umfang erstreckt.

11. Greif- und Ver-/ Entriegelungssystem nach einem der vorherigen Ansprüche, wobei der Betätigungshebel (44) aus einem Zapfen besteht.

12. Greif- und Ver-/ Entriegelungssystem nach einem der vorherigen Ansprüche, wobei das innere Rohr (1) und/oder das äußere Rohr (2) eine oder mehr Dichtungen umfassen, um eine dichte Montage zwischen ihnen auszuführen.

13. Greif- und Ver-/ Entriegelungssystem nach Anspruch 12, wobei das Greiforgan und die Einrastvorrichtung(en) dimensioniert sind, um die Reibungskräfte der Dichtung(en) beim Einsetzen oder Herausnehmen des inneren Rohrs in das bzw. aus dem äußeren Rohr zu überwinden.

14. Greif- und Ver-/ Entriegelungssystem nach einem der vorherigen Ansprüche, wobei das innere Rohr ein Probenträgerrohr und das äußere Rohr einen Messinstrumentträger bildet.

15. Greif- und Ver-/ Entriegelungssystem nach Anspruch 14, das ein System zum Einsetzen und Herausnehmen eines Probenträgerrohrs bildet, das dazu dient, eine Probe nuklearen Materials, wie z. B. nukleare Brennstoffe, in einem Messinstrumentträger-Rohr, das zur Aufnahme von Messwertgebern und einem Kühlsystem dient, aufzunehmen.

## Claims

1. Gripping and locking/unlocking system comprising an outer tube (2), an inner tube (1, 10) designed to be fitted inside the outer tube, a gripper member (6) with a gripper head designed to be housed in the inner tube (1), in which system the outer tube and the gripper head each comprise at their periphery at least one groove (20, 60), and in which system the inner tube comprises at least one catching device (4) connected at its upper end (10A) and at least one notch (11) formed in the thickness of the inner tube from its upper end,
the catching device comprising:
- a first hook, referred to as a locking hook (40), mounted to pivot about a pivot pin (42) orthogonal to the longitudinal axis (X) of the inner tube between a locked position in which it is housed in the groove (20) of the outer tube (2) to lock the inner and outer tubes together, and an unlocked position in which it is distant from the said groove,
- a second hook referred to as a gripping hook (41), mounted to pivot on the first hook (40) about a pivot pin (43) orthogonal to the longitudinal axis (X) of the inner tube, between a gripping position in which it is housed in the groove (60) of the gripper head (6) so as to grip the inner tube and at least one release position in which it is distant from the said groove,
- an actuating lever (44) mounted on the pivot pin (42) about which the locking hook pivots between a first neutral position in which it is distant from the notch (11) and does not project into the inner tube and a second neutral position in which it is housed in the notch (11), passing via an actuating position in which it does project into the inner tube (1), the actuating lever (44) being connected for rotation to the locking hook (40) between its actuating position and its second neutral position, and free to rotate independently of the locking hook between its first and second neutral positions,
- a first elastic return means (5) for returning the gripping hook (41) from a released position to its gripping position,
the system being configured so that:
• when the inner tube (1) is fitted inside the outer tube (2) and locked thereto by the locking hook (40), a downwards translational movement of the gripper head (6) in the inner tube (1) over a given travel (A) causes the actuating lever (44) to pivot from its actuating position into its second neutral position and thus simultaneously causes the locking hook (40) to pivot from its locked position to its unlocked position, then causes the gripping hook (41) to pivot both under the effect of its self weight and under the elastic effect of the first return means (5) into the groove (60) of the gripper head, thus unlocking the inner and outer tubes from one another and then causing the inner tube to be gripped by the head, at the end of the travel (A),
• when the gripper head (6) and the inner tube (1) are locked together by the gripping hook (41), a downwards translational movement of the gripper head and of the inner tube inside the outer tube over a given travel (B) greater than the travel (A) causes the gripping hook (41) to be released from the groove (60) of the head then causes the actuating lever (44) to disengage from its second neutral position and thus simultaneously causes the locking hook (40) to pivot from its unlocked position into its locked position under the effect at least of its self weight, thus unlocking the inner tube (1) from the gripper head and locking together the inner and outer tubes, at the end of the travel B.

2. Gripping and locking/unlocking system according to Claim 1, comprising a plurality of catching devices (4) connected to the upper end of the inner tube (1), the catching devices being distributed about the periphery of the inner tube in order to provide a statically determinate distribution of locking and gripping loads.

3. Gripping and locking/unlocking system according to Claim 2, comprising three catching devices (4) arranged 120° apart about the longitudinal axis (X) of the inner tube.

4. Gripping and locking/unlocking system according to one of the preceding claims, the first elastic return means (5) consisting of a torsion coil spring mounted around the pivot pin (43) about which the gripping hook (41) pivots, with its two end turns fixed and a pressing central turn (50) configured to press against the gripping hook (41).

5. Gripping and locking/unlocking system according to one of the preceding claims, comprising a second elastic return means (7) for returning the locking hook (40) from its unlocked position to its locked position.

6. Gripping and locking/unlocking system according to Claim 5, the second elastic return means consisting of a coil torsion spring (17) mounted around the pivot pin (42) about which the locking hook (40) pivots, with its two end turns (71, 72) fixed and a central pressing turn (70) configured to press against the locking hook (40).

7. Gripping and locking/unlocking system according to one of the preceding claims, the locking hook consisting of a finger (40a) of a shape complementing the groove (20) of the outer tube (2), and of a substantially V-shaped yoke (40b) connected to the finger and inside which the gripping hook (41) is mounted.

8. Gripping and locking/unlocking system according to one of the preceding claims, in which the groove (20) of the outer tube (2) extends around the entire periphery thereof.

9. Gripping and locking/unlocking system according to one of Claims 1 to 8, comprising at least one groove (20) of the outer tube (2) extending over part thereof.

10. Gripping and locking/unlocking system according to one of the preceding claims, in which the groove (60) of the gripper head (6) extends over the entire periphery thereof.

11. Gripping and locking/unlocking system according to one of the preceding claims, the actuating lever (44) consisting of a lug.

12. Gripping and locking/unlocking system according to one of the preceding claims, the inner tube (1) and/or the outer tube (2) comprising one or more seals in order to create a sealed assembly with one another.

13. Gripping and locking/unlocking system according to Claim 12, the gripper member and/or the catching device(s) being dimensioned to overcome the friction forces of the seal(s) (8) as the inner tube is introduced into or extracted from the outer tube.

14. Gripping and locking/unlocking system according to one of the preceding claims, the inner tube constituting a material specimen holder tube, the outer tube constituting a measurement instrumentation holder tube.

15. Gripping and locking/unlocking system according to Claim 14, constituting a system for inserting and extracting a specimen holder tube intended to house a specimen of nuclear materials, such as nuclear fuels, into and from a measurement instrumentation holder tube intended to house measurement sensors and a cooling system.
